# EUROPEAN PATENT APPLICATION

(11) **EP 3 756 992 A1**
(43) Date of publication of application: **30.12.2020**
(21) Application number: 20181928.1
(22) Date of filing: 24.06.2020
(51) Int. Cl.: B64C 7/00, B64C 1/00

(54) **WING TO FUSELAGE JUNCTION SHAPING AND ASSOCIATED METHOD**

(30) Priority: 24.06.2019 US 201962865869 P
(71) Applicant: Bombardier Inc., Dorval QC H4S1Y9 (CA)
(72) Inventor: Bochud, Pascal, Saint-Laurent, Quebec H4N 2J8 (CA); Mokhtarian, Farzad, Baie d Urfe, Quebec H9X 1R4 (CA); Pepin, Francois, Beaconsfield, Québec H9W 5J1 (CA); Kafyeke, Fassi, Laval, Quebec H7P 5C6 (CA)
(74) Representative: HGF

(57) **Abstract**

Wing to fuse junction shaping, and associated systems and methods are disclosed herein. An aircraft includes: a fuselage, a wing, and a fairing that covers a junction between the wing and the fuselage. The fairing is configured to receive an inboard section of the wing. An outer surface of the fairing includes an upstream bump proximate to a leading edge of the wing, a midsection sculpting, and a downstream bump proximate to a trailing edge of the wing.

## Description

### BACKGROUND

An aircraft wing is typically designed for minimum drag at a specific value of its long range cruise (LRC) conditions (e.g., Mach number). As aircraft speed is increased beyond LRC conditions into a high speed cruise (HSC) range, shockwaves strengthen over the wing, and wave drag on the aircraft rapidly rises. Typically, the above scenario is more severe on the inboard section of the wing (close to the fairing and fuselage of the aircraft) where the wing is thicker because of fuel capacity considerations.

Wave drag may constitute a significant portion of the total aircraft drag and may severely limit the HSC capability of the aircraft. Furthermore, wave drag may cause issues with stability and control of the aircraft (e.g., early onset of buffeting, lateral stability problems, control-surface ineffectiveness, aileron reversal, etc.). However, an inverse problem is also present. Namely, if the design of wing is optimized for the HSC conditions, then wing performance is reduced when flying under the LRC conditions.

Generally, a redesign of the wing is necessary to optimize the performance of the wing outside of its designed-for LRC conditions. However, such redesign requires significant financial investment and lead time. Accordingly, it would be advantageous to provide systems and/or methods for improving the performance of the wing under variable cruise conditions.

### SUMMARY

According to one aspect of the present invention there is provided, an aircraft, comprising, a fuselage, a wing; and a fairing that covers a junction between the wing and the fuselage, wherein the fairing is configured to receive an inboard section of the wing, wherein an outer surface of the fairing includes an upstream bump proximate to a leading edge of the wing, a midsection sculpting, and a downstream bump proximate to a trailing edge of the wing.

Preferably, the outer surface of the fairing is shaped as an outside surface of an hourglass.

Preferably also, the upstream bump is larger than the downstream bump.

Preferably also, a maximum deviation amplitude of the upstream bump is located between about 20% of a wing root chord upstream from the leading edge of the wing and about 20% of a wing root chord downstream from the leading edge of the wing.

Preferably also, a maximum deviation amplitude of the downstream bump is located between about 80% and about 120% of a wing root chord downstream from the leading edge.

Preferably also, a maximum deviation amplitude of the sculpting is located between about 20% and about 80% of a wing root chord downstream from the leading edge of the wing.

Preferably also, at an intersection of an upper surface of the wing and the fairing, a difference between a maximum deviation amplitude of the upstream bump and a maximum deviation amplitude of the sculpting is between about 1% and about 7% of a wing root chord.

Preferably also, at the intersection of the upper surface of the wing and the fairing, the difference between the maximum deviation amplitude of the upstream bump and the maximum deviation amplitude of the sculpting is between 2.5% and 3.5% of the wing root chord.

Preferably also, at an intersection of a lower surface of the wing and the fairing, a difference between a maximum deviation amplitude of the upstream bump and a maximum deviation amplitude of the sculpting is between about 1% and about 7% of a wing root chord.

Preferably also, at an intersection of a lower surface of the wing and the fairing, the difference between a maximum deviation amplitude of the upstream bump and a maximum deviation amplitude of the sculpting is between 1.7% and 2.9% of the wing root chord.

According to a second aspect of the present invention there is provided, a fairing of an aircraft, comprising, an upstream bump proximate to a leading edge of a wing of the aircraft, a midsection sculpting, and a downstream bump proximate to a trailing edge of the wing of the aircraft, wherein an outer surface of the fairing is shaped as an hourglass.

Preferably, a maximum deviation amplitude of the upstream bump is located between about 20% of a wing root chord upstream from the leading edge of the wing and about 20% of a wing root chord downstream from the leading edge of the wing, wherein a maximum deviation amplitude of the downstream bump is located between about 80% and about 120% of the wing root chord downstream from the leading edge, and wherein a maximum deviation amplitude of the sculpting is located between about 20% and about 80% of the wing root chord downstream from the leading edge of the wing.

Preferably also, at an intersection of an upper surface of a wing of the aircraft and the fairing, a difference between a maximum deviation amplitude of the upstream bump and a maximum deviation amplitude of the sculpting is between about 1% and about 7% of a wing root chord.

Preferably also, at the intersection of the upper surface of the wing and the fairing, the difference between the maximum deviation amplitude of the upstream bump to the maximum deviation amplitude of the sculpting is between 2.5% and 3.5% of the wing root chord.

Preferably also, at an intersection of a lower surface of the wing and the fairing, a difference from a maximum deviation amplitude of the upstream bump and a maximum deviation amplitude of the sculpting is between about 1% and about 7% of a wing root chord.

Preferably also, the intersection of a lower surface of the wing and the fairing, the difference from a maximum deviation amplitude of the upstream bump to a maximum deviation amplitude of the sculpting is between 1.7% and 2.9% of the wing root chord.

According to a further aspect of the present invention there is provided, a method for manufacturing an aircraft, comprising, attaching a wing to a fuselage; and covering a junction between the wing and the fuselage with a fairing, wherein an outer surface of the fairing includes an upstream bump proximate to a leading edge of the wing, a midsection sculpting, and a downstream bump proximate to a trailing edge of the wing, and wherein an outer surface of the fairing is shaped as an hourglass.

Preferably, a maximum deviation amplitude of the upstream bump is located between about 20% of a wing root chord upstream from the leading edge of the wing and about 20% of a wing root chord downstream from the leading edge of the wing, a maximum deviation amplitude of the downstream bump is located between about 80% and about 120% of the wing root chord downstream from the leading edge, and a maximum deviation amplitude of the sculpting is located between about 20% to about 80% of the wing root chord downstream from the leading edge of the wing.

Preferably also, at an intersection of an upper surface of a wing of the aircraft and the fairing, a difference between a maximum deviation amplitude of the upstream bump and a maximum deviation amplitude of the sculpting is between about 1% and about 7% of a wing root chord, and, at an intersection of a lower surface of the wing and the fairing, a difference between a maximum deviation amplitude of the upstream bump and a maximum deviation amplitude of the sculpting is between about 1% and about 7% of a wing root chord.

Preferably also, at the intersection of the upper surface of the wing and the fairing, the difference between the maximum deviation amplitude of the upstream bump and the maximum deviation amplitude of the sculpting is between 2.5% and 3.5% of the wing root chord, and, at an intersection of a lower surface of the wing and the fairing, a difference from a maximum deviation amplitude of the upstream bump to a maximum deviation amplitude of the sculpting is between 1.7% and 2.9% of the wing root chord.

### DESCRIPTION OF THE DRAWINGS

The foregoing aspects and the attendant advantages of the inventive technology will become more readily appreciated with reference to the following detailed description, when taken in conjunction with the accompanying drawings, wherein:
FIGURES 1A, 1B and 1C show side, bottom and isometric views, respectively, of an aircraft fairing in accordance with the prior art;
FIGURES 2A, 2B and 2C show side, bottom and isometric views, respectively, of one embodiment of an aircraft fairing in accordance with the present technology;
FIGURES 3A and 3B show top and bottom views, respectively, of one embodiment of an aircraft fairing in accordance with the present technology;
FIGURE 4 compares distribution of pressure coefficient for an aircraft having the inventive fairing (present technology) with an aircraft having the conventional fairing (the prior art) for a wing section located on the inboard wing;
FIGURE 5 shows the span-wise location of the section for which the effect of the present technology on the wing pressure is shown in FIGURE 4;
FIGURE 6 shows the disturbed flow on the wing upper surface, at or beyond the HSC point, in accordance with the prior art; and
FIGURE 7 shows the flow on the wing upper surface for one embodiment of an aircraft in accordance with the present technology.

### DETAILED DESCRIPTION

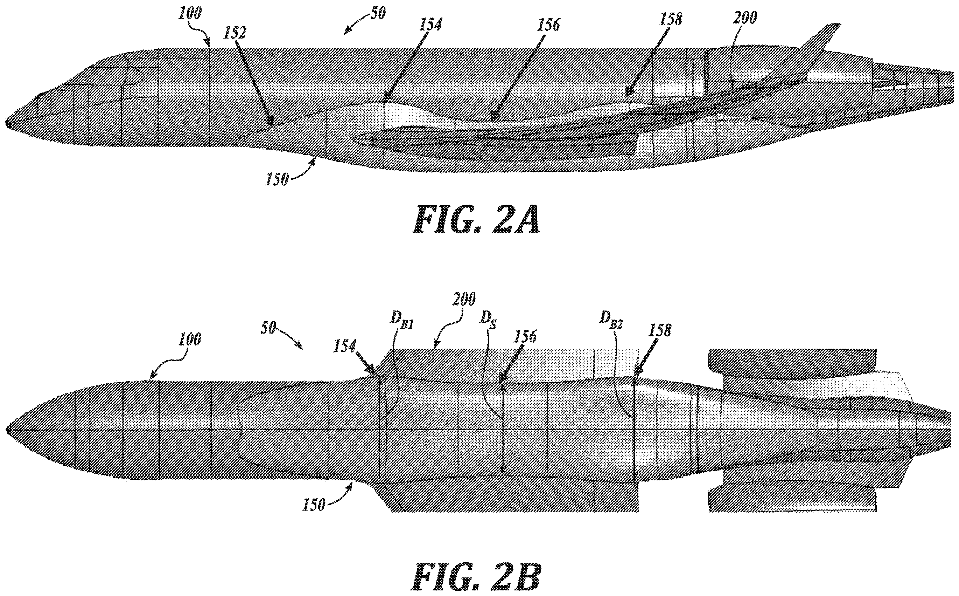

The following disclosure describes various embodiments of systems, devices and associated methods that increase the range of applicability of an aircraft wing. A person skilled in the art will also understand that the technology may have additional embodiments, and that the technology may be practiced without several of the details of the embodiments described below with reference to FIGURES 2A-3B, 5, and 7.

Reference throughout this specification to "one example" or "one embodiment" means that a particular feature, structure, or characteristic described in connection with the example is included in at least one example of the present invention. Thus, the appearances of the phrases "in one example" or "in one embodiment" in various places throughout this specification are not necessarily all referring to the same example. Furthermore, the particular features, structures, or characteristics may be combined in any suitable manner in one or more examples.

Briefly described, methods and devices for lowering drag coefficient at high speed cruise (HSC) conditions are described. In some embodiments, the HSC performance of an aircraft wing is improved by shaping a wing-to-fuselage fairing (also referred to as a belly fairing, or a fairing) that covers the area (junction) where the wing joins the aircraft fuselage. For example, the adverse drag-rise characteristics caused by using the wing beyond its optimal design point may be postponed and/or reduced by selectively speeding the flow of air near the leading edge and the trailing edge of the inboard section of the wing. In some embodiments, the flow near the leading edge and the trailing edge is accelerated by the enlarged portions of the fairing (also referred to as bumps, humps or enlargements). However, even though accelerating the flow at the leading- and trailing-edges of the wing is intuitively expected to increase the drag, this selective acceleration of the flow near the leading- and trailing-edges of the wing redistributes the lift along the chord and span of the wing, thus, in at least some embodiments, delaying and/or weakening development of shock waves. As a result, drag force in the HSC regime may be reduced in comparison with a conventional fairing, leading to significant high-speed performance improvements. Furthermore, in some embodiments, the middle section of the belly fairing is sculpted into a narrowing cross-section of the fairing to decelerate flow, thus further reducing the drag of the wing.

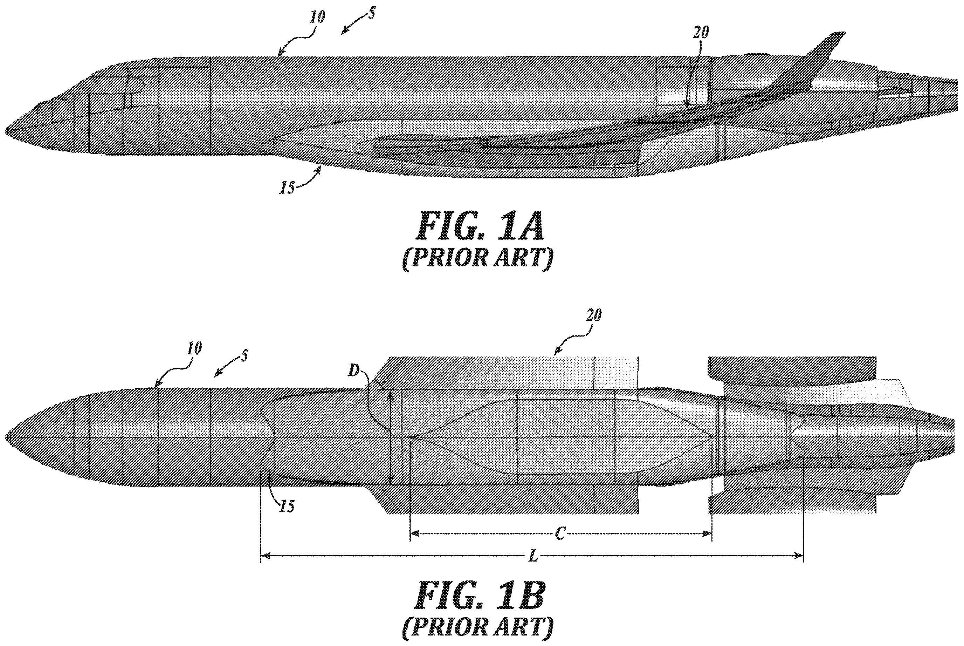

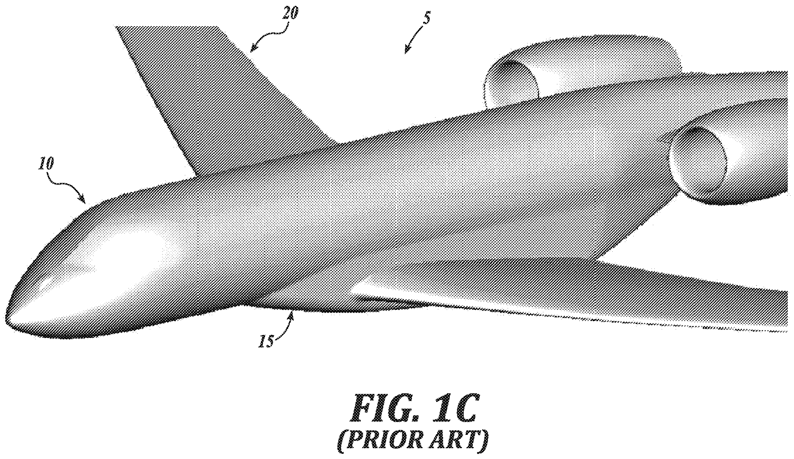

FIGURES 1A, 1B and 1C show side, bottom and isometric views, respectively, of an aircraft fairing in accordance with the prior art. FIGURE 1A shows an aircraft 5 having a fuselage 10. A fairing 15 covers a junction of an aircraft wing 20 to the fuselage 10.

FIGURE 1B shows the bottom view of the aircraft 5. The fairing 15 extends along the fuselage 10 from upstream of the leading edge of the wing 20 to downstream of the trailing edge of the wing. Conventional fairing 15 can be characterized by its overall length L, a length of its flattened portion C, and a width D. For most of its longitudinal length, the width D of the conventional fairing is generally constant.

FIGURE 1C shows the isometric view of the aircraft 5. In operation, the aircraft 5 spends most of the time flying at a constant cruise speed (also referred to as a long range cruise (LRC) or LRC Mach number). Therefore, the aircraft wing is specifically designed for a given cruise speed, for example, Mach 0.8. When the speed of the aircraft is increased to high speed cruise (HSC) speed, for example, Mach 0.9, the drag of the aircraft rises rapidly, because of the strengthening shock waves on the wing. Operating the aircraft beyond its LRC Mach number may also cause stability and control issues (e.g., early onset of buffeting, lateral stability problems, ineffectiveness of the control surface, aileron reversal, etc.). Generally, optimization of the aircraft for flying in the HSC regime requires redesigning the wing. However, such redesign is expensive and time-consuming.

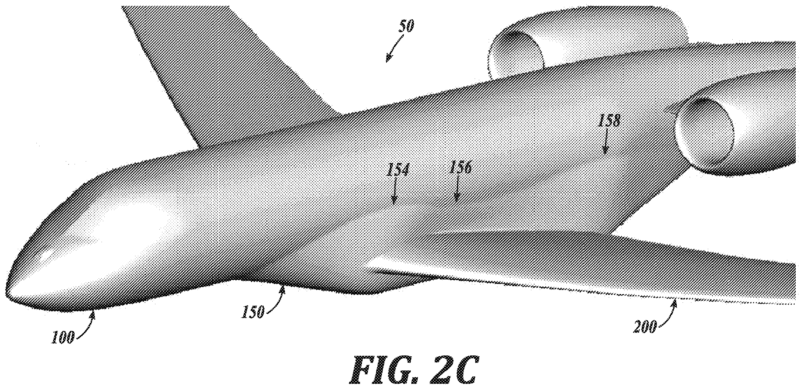

Turning now to FIGURES 2A, 2B and 2C, there are shown side, bottom and isometric views, respectively, of an embodiment of an aircraft fairing in accordance with the present technology. FIGURE 2A shows an aircraft 50 having a fuselage 100, a fairing 150, and a wing 200. In some embodiments, the fairing 150 is shaped to have a first upstream bump 154 followed by a sculpting 156 and a second downstream bump 158. In some embodiments, such shaping of the fairing 150 may be referred to as an "hourglass shape" or a constricted middle section. For example, the outside surface of the fairing 150 may approximate a portion of the outside surface of an hourglass. As such, the sculpting 156 forms a valley between the first upstream bump 154 and the second downstream bump 158. The sculpting 156 may form a substantially concave surface, or may define an indented flat portion in between the first upstream bump 154 and the second downstream bump 158.

FIGURE 2B shows a bottom view of the fairing 150. At the location of the first bump 154, the fairing 150 has a width **D_{B1}** that is larger than a width **D_{S}** at the location of the sculpting 156, which, in turn, is smaller than a width **D_{B2}** at the location of the second bump 158. The bumps 154, 158 may be characterized by an apex (a summit or a crest), and a length (not depicted). When referring to the location of the bumps 154, 158, the relevant location is that of the corresponding apex of the bump. Analogously, when referring to the location of the sculpting 156, the relevant location is that of a maximum valley of the sculpting. In some embodiments, depending on the shape and size of the bump, the bump 154 may begin upstream of the leading edge of the wing. Conversely, the bump 158 may end downstream of the trailing edge of the wing. In some embodiments, a transition between the bump and the sculpting may correspond to an inflection point between the bump and the sculpting. In other embodiments, other points may represent transition between the bump and the sculpting.

FIGURE 2C shows an isometric view of the aircraft fairing 150 in accordance with the present technology. In operation, the flow of air accelerates near the first and second bumps 154, 158, and decelerates near the sculpting 156. Without being bound to theory, it is believed that the selective speeding up and slowing down of the airflow redistributes the lift along the chord and span of the wing 200. In turn, shock waves are delayed and more effectively managed, thereby delaying rise of the drag force under HSC conditions. Consequently, in at least some embodiments, HSC performance of the aircraft wing designed for LRC conditions is less reduced in comparison to the same wing 200 coupled to a conventional fairing under HSC conditions.

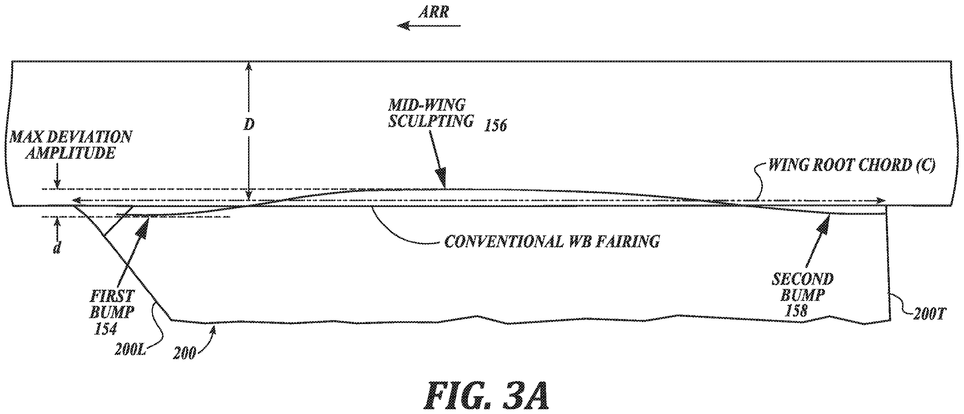

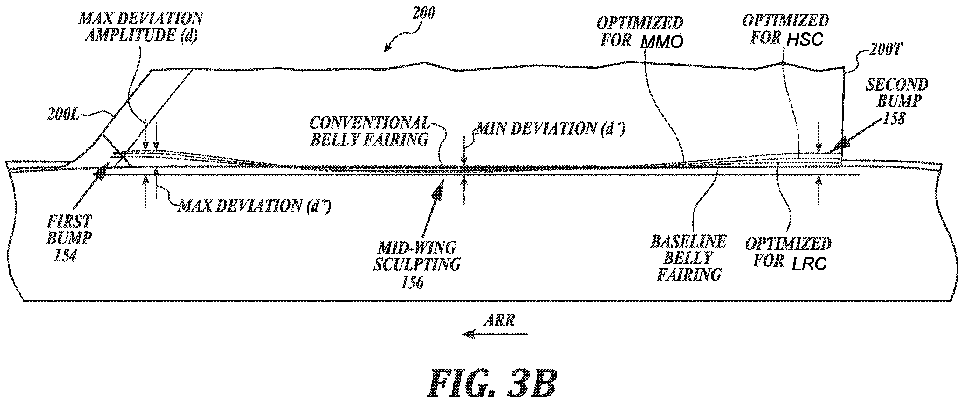

FIGURES 3A and 3B show top and bottom views, respectively, of another embodiment of an aircraft fairing in accordance with the present technology. The illustrated aircraft flies in the direction of arrow ARR. A leading edge of the wing 200 is denoted as 200L, and a trailing edge is denoted as 200T. When looking at an edge of the fairing meeting the wing in the top view of FIGURE 3A, the edge of a conventional fairing is generally a straight line along the chord of the wing (denoted with the solid line "Conventional WB Fairing" in FIGURES 3A and 3B).

Turning attention to FIGURE 3A, the fairing of the present technology includes the first and second bumps proximate to the leading edge 200L and the trailing edge 200T, respectively, and a sculpting between the first and second bumps. A dimensional difference (also referred to as a width difference) between one of the bumps (e.g., the first bump or the second bump) and the sculpting is denoted as **d** (also referred to as maximum deviation amplitude). In some embodiments, the first bump 154 is the larger of the two bumps.

Referring now to FIGURE 3B, a bottom view of the aircraft fairing is shown according to an embodiment of the present technology. In general, optimal size and shape of the fairing 150 change for different HSC conditions. For example, size of the bumps and sculpting may increase as the relative difference between the LRC and HSC conditions increases. This is illustrated with a family of curves shown for Mach numbers 0.88, 0.90 and 0.925. For each Mach number, maximum deviation amplitude **d** represents the dimensional difference (also referred to as a width difference) from the larger of the bumps (e.g., the first bump) to the bottom of the valley of the sculpting 156. Analogously, maximum deviation amplitude **d⁺** represents the dimensional difference from the larger of the bumps (e.g., the upstream bump or the first bump) to the straight line of a baseline (conventional) fairing, and maximum deviation amplitude **d⁻** represents dimensional difference from the sculpting to the straight line of the baseline fairing. In general, these maximum deviation amplitudes (**d, d⁺, d⁻**) increase as the HSC Mach number increases.

Table 1 shows locations of the bumps and sculpting for a sample fairing 150. In some embodiments, location of the first bump may be within about -20% to about 20% of the wing root chord, and location of the second bump may be within about 80% to about 120% of the wing root chord. In some embodiments, the location of the sculpting may be within about 20% to about 80% of the wing root chord.

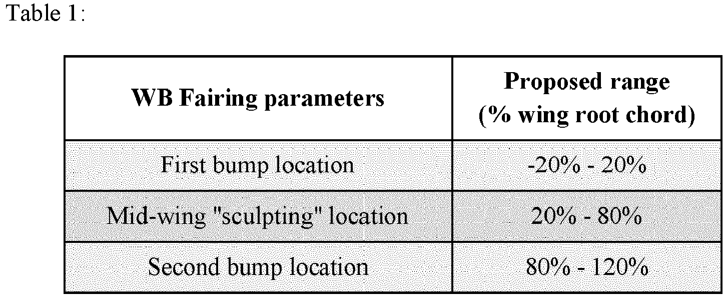

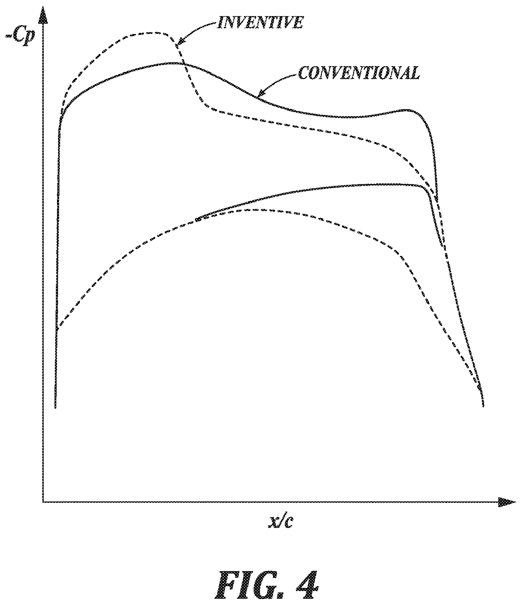

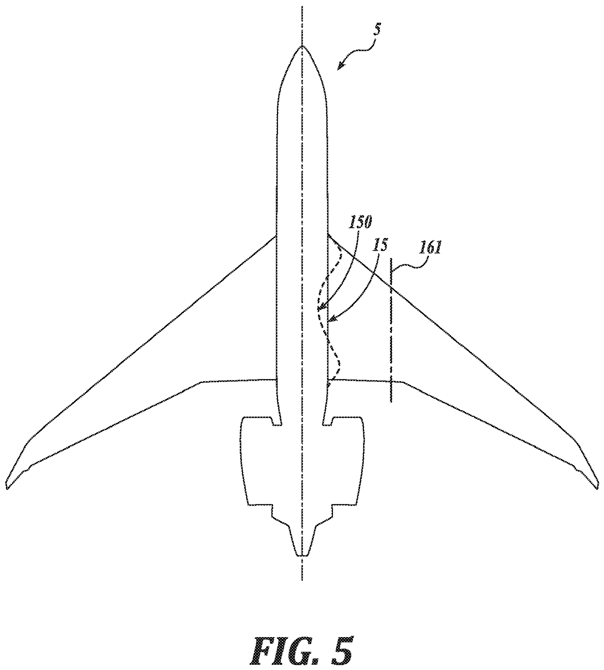

FIGURE 4 shows notional pressure coefficients for a conventional and inventive fairing for a wing section located in the vicinity of the wing-to-fuselage fairing, and FIGURE 5 shows the span-wise location 161 of the wing section for which the pressure distributions are shown on FIGURE 4. The pressure coefficient corresponds to the MMO (Maximum Operating Mach) condition of Mach 0.925. When comparing the prior art with an embodiment of the present technology, the aircraft with the present technology exhibits somewhat more negative pressure coefficient close to the leading edge of the wing. Furthermore, it has been observed that the shock wave is weaker with the inventive wing-to-fuselage fairing. In general, both of these effects are considered desirable for an aircraft wing.

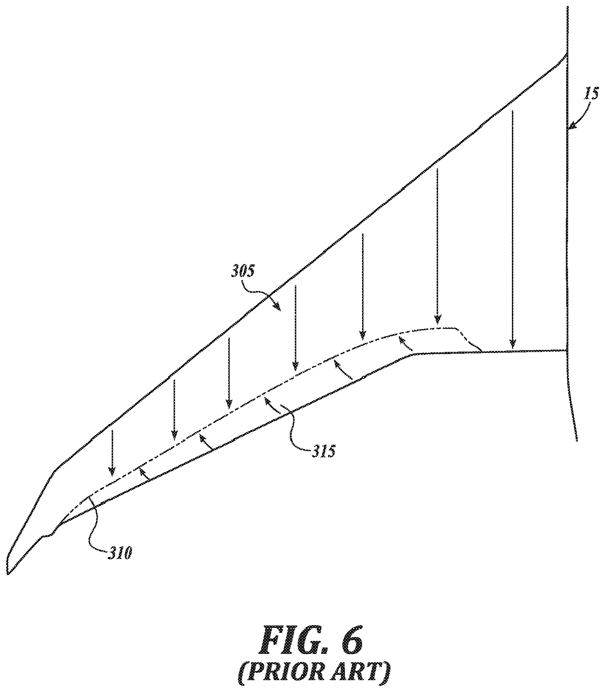

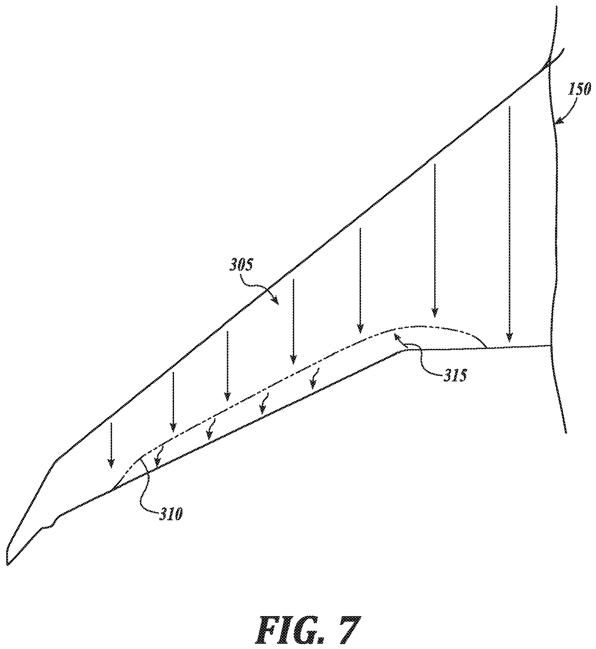

FIGURE 6 shows the direction of the air flow over a wing in accordance with the prior art, and FIGURE 7 shows the direction of the air flow over a wing in accordance with the present technology. A shockwave front is denoted with a numeral 310. The flow directions 305, 315 correspond to the MMO condition of Mach 0.925 for both figures. With the wing of FIGURE 6, the region of reversed flow 315 close to the trailing edge of the wing indicates undesirable flow separation. The area of the flow separation 315 is smaller for the aircraft in accordance with the present technology shown in the FIGURE 7 than the equivalent area 315 for the prior art wing shown in FIGURE 6. Therefore, the wing illustrated in FIGURE 7 is expected to perform better than the same wing shown in FIGURE 6 under the MMO conditions, at least in part because the fairing 150 shown in FIGURE 7 performs better than the conventional fairing 15 shown in FIGURE 6. For example, and without being bound to theory, the fairing 150 may delay or weaken shock waves, therefore reducing the severity of flow separation along the wing.

From the foregoing, it will be appreciated that specific embodiments of the technology have been described herein for purposes of illustration, but that various modifications may be made without deviating from the disclosure. As used herein, the term "about" indicates that the subject value can be modified by plus or minus 5% and still fall within the disclosed embodiment. Moreover, while various advantages and features associated with certain embodiments have been described above in the context of those embodiments, other embodiments may also exhibit such advantages and/or features, and not all embodiments need necessarily exhibit such advantages and/or features to fall within the scope of the technology. Accordingly, the disclosure can encompass other embodiments not expressly shown or described herein.

## Claims

1. An aircraft (50), comprising:
a fuselage (100);
a wing (200); and
a fairing (150) that covers a junction between the wing (200) and the fuselage (100), wherein the fairing (150) is configured to receive an inboard section of the wing (200),
wherein an outer surface of the fairing (150) includes an upstream bump (154) proximate to a leading edge (200L) of the wing (200), a midsection sculpting (156), and a downstream bump (158) proximate to a trailing edge (200T) of the wing (200).

2. The aircraft (50) of claim 1, wherein the outer surface of the fairing (150) is shaped as an outside surface of an hourglass.

3. The aircraft (50) of claim 1, wherein the upstream bump (154) is larger than the downstream bump (158).

4. The aircraft (50) of claim 1, wherein a maximum deviation amplitude of the upstream bump (154) is located between about 20% of a wing root chord upstream from the leading edge (200L) of the wing (200) and about 20% of a wing root chord downstream from the leading edge (200L) of the wing (200).

5. The aircraft (50) of claim 1, wherein a maximum deviation amplitude of the downstream bump (158) is located between about 80% and about 120% of a wing root chord downstream from the leading edge (200L).

6. The aircraft (50) of claim 1, wherein a maximum deviation amplitude of the sculpting (156) is located between about 20% and about 80% of a wing root chord downstream from the leading edge (200L) of the wing (200).

7. The aircraft (50) of claim 1, wherein, at an intersection of an upper surface of the wing (200) and the fairing (150), a difference between a maximum deviation amplitude of the upstream bump (154) and a maximum deviation amplitude of the sculpting (156) is between about 1% and about 7% of a wing root chord.

8. The aircraft (50) of claim 7, wherein, at the intersection of the upper surface of the wing (200) and the fairing (150), the difference between the maximum deviation amplitude of the upstream bump (154) and the maximum deviation amplitude of the sculpting (156) is between 2.5% and 3.5% of the wing root chord.

9. The aircraft (50) of claim 1, wherein, at an intersection of a lower surface of the wing (200) and the fairing (150), a difference between a maximum deviation amplitude of the upstream bump (154) and a maximum deviation amplitude of the sculpting (156) is between about 1% and about 7% of a wing root chord.

10. The aircraft (50) of claim 1, wherein, at an intersection of a lower surface of the wing (200) and the fairing (150), the difference between a maximum deviation amplitude of the upstream bump (154) and a maximum deviation amplitude of the sculpting (156) is between 1.7% and 2.9% of the wing root chord.

11. A method for manufacturing an aircraft (50), comprising:
attaching a wing (200) to a fuselage (100); and
covering a junction between the wing (200) and the fuselage (100) with a fairing (150),
wherein an outer surface of the fairing (150) includes an upstream bump (154) proximate to a leading edge (200L) of the wing (200), a midsection sculpting (156), and a downstream bump (158) proximate to a trailing edge (200T) of the wing (200), and wherein an outer surface of the fairing (150) is shaped as an hourglass.

12. The method of claim 11, wherein a maximum deviation amplitude of the upstream bump (154) is located between about 20% of a wing root chord upstream from the leading edge (200L) of the wing (200) and about 20% of a wing root chord downstream from the leading edge (200L) of the wing (200), wherein a maximum deviation amplitude of the downstream bump (158) is located between about 80% and about 120% of the wing root chord downstream from the leading edge (200L), and wherein a maximum deviation amplitude of the sculpting (156) is located between about 20% to about 80% of the wing root chord downstream from the leading edge (200L) of the wing (200).

13. The method of claim 11, wherein, at an intersection of an upper surface of a wing (200) of the aircraft (50) and the fairing (150), a difference between a maximum deviation amplitude of the upstream bump (154) and a maximum deviation amplitude of the sculpting (156) is between about 1% and about 7% of a wing root chord, and wherein, at an intersection of a lower surface of the wing (200) and the fairing (150), a difference between a maximum deviation amplitude of the upstream bump (154) and a maximum deviation amplitude of the sculpting (156) is between about 1% and about 7% of a wing root chord.

14. The method of claim 13, wherein, at the intersection of the upper surface of the wing (200) and the fairing (150), the difference between the maximum deviation amplitude of the upstream bump (154) and the maximum deviation amplitude of the sculpting (156) is between 2.5% and 3.5% of the wing root chord, and wherein, at an intersection of a lower surface of the wing (200) and the fairing (150), a difference from a maximum deviation amplitude of the upstream bump (154) to a maximum deviation amplitude of the sculpting (156) is between 1.7% and 2.9% of the wing root chord.
